# EUROPÄISCHE PATENTSCHRIFT

(11) **EP 0 669 224 B1**
(45) Veröffentlichungstag und Bekanntmachung des Hinweises auf die Patenterteilung: **24.09.1997**
(21) Anmeldenummer: 95101899.3
(22) Anmeldetag: 13.02.1995
(51) Int. Cl.: B60Q 3/02

(54) **Leuchte für den Innenraum von Kraftfahrzeugen**
Interior light for vehicle
Lampe pour l'intérieur d'un véhicule

(30) Priorität: 23.02.1994 DE 4405721
(43) Veröffentlichungstag der Anmeldung: 30.08.1995
(73) Patentinhaber: Hella KG Hueck & Co., 59552 Lippstadt (DE)
(72) Erfinder: Rafalzik, Siegfried, D-59555 Lippstadt (DE)

(56) Entgegenhaltungen:
- EP-A- 0 451 548
- DE-A- 3 323 236
- FR-A- 2 539 685

## Beschreibung

Die Erfindung betrifft eine Leuchte für den Innenraum von Kraftfahrzeugen, mit einem Trägerteil, welches in eine Fahrzeugöffnung einsetzbar ist, mit einer für die allgemeine Innenraumbeleuchtung dienenden ersten Leuchtenkammer, deren Innenraum von dem Trägerteil und einer die erste Leuchtenkammer zur Vorderseite der Leuchte hin abschließenden lichtdurchlässigen Abschlußscheibe gebildet ist, zwischen der und dem Trägerteil eine von der Vorderseite der Leuchte her lösbar Verbindung besteht, mit einer für Leselicht dienenden zweiten Leuchtenkammer, welche durch eine lichtundurchlässigen Trennwand von der ersten Leuchtenkammer getrennt ist und deren Vorderseite von einer Lichtscheibe abgeschlossen ist, welche mit der Trennwand verbunden ist und welche zu einem Randabschnitt der Abschlußscheibe angrenzend verläuft, mit jeweils einer in die erste und zweite Leuchtenkammer eingesetzten Lampe, und mit zwei elektrischen Kontaktelementen, durch welche eine elektrische Verbindung zwischen der Lampe der Leseleuchte und zwei an dem Trägerteil befestigten elektrischen Leitungselementen besteht.

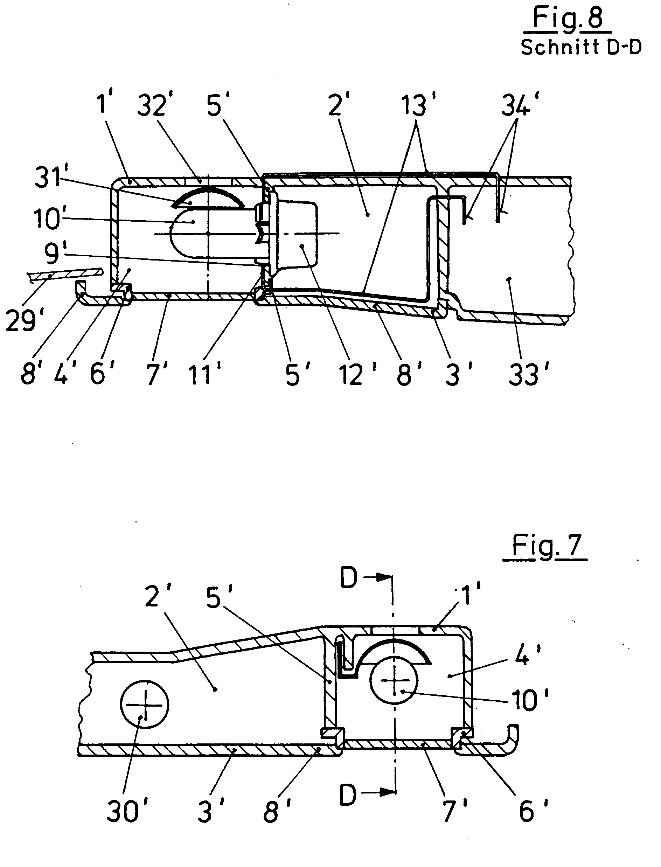

Eine solche aus der Praxis bekannte Leuchte für den Innenraum von Kraftfahrzeugen ist in den Figuren 7 und 8 der Zeichnung dargestellt. Die Figur 7 zeigt in einer Teilansicht einen vertikalen Schnitt durch eine erste Leuchtenkammer (2) für die allgemeine Innenraumbeleuchtung und eine unmittelbar neben der ersten Leuchtenkammer (2) angeordnete zweite Leuchtenkammer (4) für Leselicht, und die Figur 8 zeigt einen Schnitt nach der Linie C-C der Figur 7. Die Leuchte ist im Fahrgastinnenraum des Kraftfahrzeuges zwischen dem Fahrer und dem Beifahrersitz in eine Öffnung einer als Dachhimmel dienenden Fahrzeugwand (29') versenkt eingebaut und weist eine erste Leuchtenkammer (2') für die allgemeine Innenraumbeleuchtung und eine zweite Leuchtenkammer (4') für Leselicht auf. In die beiden Leuchtenkammern (2', 4') ist jeweils eine Lampe (30' bzw. 10') eingesetzt. Um die Lampen (30'und 10') wechseln zu können, ist die lichtdurchlässige Abschlußscheibe (3') lösbar an einem aus Kunststoff bestehenden Trägerteil (1') befestigt. Die Abschlußscheibe (3') kann auch von dem Trägerteil (1') abgenommen werden, wenn das Trägerteil (1') in der Öffnung der Fahrzeugwand (29') verbleibt. Dadurch ist die Leuchte immer sicher an der Fahrzeugwand befestigt und eine Beschädigung des Dachhimmels ausgeschlossen. Die zweite Leuchtenkammer (4') ist gegenüber der ersten Leuchtenkammer (2') sehr klein und die Lichtscheibe (7') ist unlösbar, wie zum Beispiel durch Kleben, mit ihren an dem Trägerteil (1') angeformten Seitenwänden verbunden. Deshalb ist die Lampe (10') von der Seite der größeren ersten Leuchtenkammer (2') her durch eine Öffnung (9') in der zwischen beiden Leuchtenkammern (2', 4') verlaufenden Trennwand (5') her hindurchgeführt und in der Öffnung mittels eines Drehverschlußes befestigt. Der Drehverschluß besteht zwischen einer Fassung (12') der Lampe (10') und dem Rand der Öffnung (9') der Trennwand (5'). Die Fassung (12') der Lampe (10') ragt in die erste Leuchtenkammer (2') hinein und ist sehr dicht zum Boden der ersten Leuchtenkammer (2') angeordnet, da die Leuchte in ihrer Tiefe wegen dem am Dachhimmel fehlenden Raum sehr flach baut. Deswegen und weil die Fassung (12') sehr klein ist, ist ein Wechsel der Lampe (10') von Hand sehr umständlich und zeitaufwendig. Der Wechsel der Lampe (10') ist besonders schwierig, wenn das Trägerteil (1) der Leuchte bei einem Wechsel in der Öffnung der Fahrzeugwand (29) verbleiben soll. Zwischen dem Boden der zweiten Leuchtenkammer (4') und der Lampe (10') ist ein kleiner schalenförmiger Reflektor (31) angeordnet, welcher mit einer seitlich abstehenden und entgegen der Lichtaustrittsrichtung gerichteten Fahne in einen Schlitz selbstrastend eingeschoben ist, welcher zwischen der Trennwand (5) und einem an den Boden der zweiten Leuchtenkammer (4') angeformten Ansatz verläuft. Auch die Montage des Reflektors (31) ist sehr umständlich und zeitaufwendig, da die Seitenwände der zweiten Leuchtenkammer (4') einen sehr kleinen Abstand zueinander aufweisen. Die zweite Leuchtenkammer (4') ist wegen ihrer Kleinheit einer sehr großen Wärmebelastung ausgesetzt. Deshalb muß diese und somit das gesamte Trägerteil (1') aus einem hochwärmebeständigen Kunststoff hergestellt sein. Ein so hochwärmebeständiger Kunststoff wäre für die erste Leuchtenkammer (2') nicht notwendig, da sie wesentlich größer als die zweite Leuchtenkammer (4') ist. Damit ein Teil der in der zweiten Leuchtenkammer (4') entstehenden Wärme entweichen kann, ist über dem Reflektor (31') in den Boden des Trägerteils (1) ein Loch (32') eingebracht. Die Lichtscheibe (7') ist von einem lichtundurchlässigen Rahmen (6') umgeben, welcher mit der Lichtscheibe (7') im Zweifarben-Spritzverfahren hergestellt ist. Der Rahmen (6') ist auf den freien Rand der einstückig mit dem Trägerteil (1') ausgeführten Seitenwände aufgelegt und mit diesen durch Kleben unlösbar verbunden. Dadurch ist die Lichtscheibe (7') klapperfrei an dem Trägerteil (1') befestigt, und nach einem Lösen der Abschlußscheibe (3') von dem Trägerteil (1') ist die Lichtscheibe (7') sicher an dem Trägerteil (1') gehalten. Die Lichtscheibe (7') ist in einem Fenster der Abschlußscheibe (3') angeordnet und zwischen ihr und dem Wandabschnitt (8') des Fensters besteht umlaufend ein kleiner Abstand, welcher durch den lichtundurchlässigen Rahmen (6') ausgefüllt ist. Dies ist sehr vorteilhaft, da bei eingeschalteter Leseleuchte kein Licht in die Abschlußscheibe eindringen kann, welches den Fahrer stört. Die elektrische Stromzuführung zur Lampe (10') der Leseleuchte erfolgt über aus Federblech hergestellte Leitungselemente (13'). Ein Leitungselement (13') ist an der Rückseite des Bodens des Trägerteils (1') befestigt und ragt mit einem einen Steckeranschluß (34') aufweisenden Endabschnitt in eine weitere Kammer (33') der Leuchte hinein, während sein anderer Endabschnitt durch eine Öffnung im Boden des Trägerteils (1') hindurchgesteckt ist und mit einem im Inneren der Leuchtenkammer (4') an der Trennwand (5') befestigten elektrischen Kontaktelement (11') kontaktiert. Das andere Leitungselement (13') weist an einem freien Endabschnitt ebenfalls einen Steckeranschluß (34') auf, welcher in der Kammer (33') zu dem anderen benachbart angeordnet ist, und verläuft von dem Steckeranschluß (34') aus durch die erste Leuchtenkammer (2') hindurch in die zweite Leuchtenkammer (4') hinein und taktiert in dieser ebenfalls mit einem an die Trennwand (5') angebrachten elektrischen Kontaktelement (11'). Die Kontaktelemente (11') sind aus Federblech hergestellt und in quer zur Lichtaustrittsrichtung verlaufende Schlitze der Trennwand (5') selbstrastend eingesetzt. An der der Trennwand (5') abgewandten Seite der Kontaktelemente (11') liegt die Fassung (12') mit jeweils einer federnden Zunge unter Vorspannung an.

Aufgabe der Erfindung ist es, die im Oberbegriff des Anspruchs 1 beschriebene Leuchte für den Innenraum von Kraftfahrzeugen derart zu gestalten, daß nach einem Abnehmen der für die allgemeine Innenraumbeleuchtung dienenden Abschlußscheibe von dem Trägerteil von Hand nicht nur die Lampe für die allgemeine Innenraumbeleuchtung, sondern auch die Lampe für das Leselicht, welche im Leuchteninneren von Hand schwer zugänglich ist, einfach und leicht gewechselt werden kann. Darüber hinaus sollen die die elektrischen Verbindungen zwischen der Lampe und den Leitungselementen herstellenden Kontaktelemente einfach und leicht montierbar sein. Weiterhin sollen sowohl die elektrische Verbindung zwischen der Lampe für das Leselicht und den an dem Trägerteil befestigten elektrischen Leitungselementen auch nach einem mehrmaligen Wechsel der Lampe sicher sein als auch die Lampe für Leselicht und die Lichtscheibe auch bei abgenommener Abschlußscheibe von dem Trägerteil gehalten werden. Diese Aufgabe wird nach der Erfindung dadurch gelöst, daß
- die Lichtscheibe der Leseleuchte, die Lampe der Leseleuchte, die zwischen beiden Leuchtenkammern verlaufende Trennwand und die beiden elektrischen Kontaktelemente zusammen eine Einheit sind, welche in den Innenraum der ersten Leuchtenkammer eingesetzt ist und entgegen der Lichtaustrittsrichtung mit einem kleinen Spiel zwischen Fixierungselementen des Trägerteils eingeführt ist und lösbar mit dem Trägerteil verbunden ist;
- die lösbare Verbindung von einem in dem Innenraum der ersten Leuchtenkammer angeordneten federnden Element gebildet ist, welches sich an dem Trägerteil abstützt und die Einheit gegen eine Innenseite einer Seitenwand der ersten Leuchtenkammer drückt und welches eine Handhabe zum Lösen der zwischen der Einheit und dem Trägerteil bestehenden Verbindung aufweist;
- die beiden Kontaktelemente der Einheit jeweils mit den beiden an dem Trägerteil befestigten elektrischen Leitungselementen durch eine lösbare Steckverbindung elektrisch verbunden sind, wobei die Kontaktelemente und die Leitungselemente in einer Richtung zusammengefügt sind, welche parallel zur Lichtaustrittsrichtung verläuft.

Da die Handhabe der lösbaren Verbindung durch die lichtdurchlässige Abschlußscheibe für die allgemeine Innenraumbeleuchtung abgedeckt ist und somit nicht zu sehen ist, kann sie so groß gestaltet werden, daß sie von Hand einfach und leicht betätigt werden kann. Das federnde Element stellt nicht nur eine lösbare Verbindung zwischen der Einheit und dem Trägerteil her, sondern dient zusammen mit der Seitenwand der ersten Leuchtenkammer, an welcher die Einheit gedrückt anliegt, zur Fixierung der Einheit quer zur Lichtaustrittsrichtung. Da zwischen der Einheit und dem Trägerteil eine lösbare elektrische Steckverbindung besteht, ist die zwischen der Einheit und dem Trägerteil bestehende elektrische Verbindung nach einem Herausnehmen der Einheit aus der ersten Leuchtenkammer selbsttätig gelöst und nach einem Einsetzen der Einheit in die erste Leuchtenkammer selbsttätig hergestellt. Bei der Verwendung eines Reflektors für die Leseleuchte muß dieser nicht zwischen die eng beieinander stehenden Seitenwände der zweiten Leuchtenkammer eingesetzt werden, sondern kann vor dem Montieren der Einheit leicht und einfach an dem gut zugänglichen, großflächigen Boden der ersten Leuchtenkammer befestigt werden.

Weiterhin ist es vorteilhaft, wenn das federnde Element in eine als Rastelement dienende Hinterschneidung des Trägerteils eingreift und die Einheit mit einem entgegen der Lichtaustrittsrichtung weisenden freien Randabschnitt gedrückt an der Seitenwand der ersten Leuchtenkammer anliegt und in eine Hinterschneidung der Seitenwand eingreift. Dadurch ist nach dem Abnehmen der Abschlußscheibe die Einheit weiterhin sicher in der ersten Leuchtenkammer gehalten. Dies ist besonders wichtig, wenn bei einem Wechsel einer der Lampen der Leuchte das Trägerteil an dem Kraftfahrzeug befestigt bleiben soll.

Vorteilhaft ist es weiterhin, wenn das federnde Element ein federnder Arm ist, welcher an dem zum Trägerteil hin gerichteten Randabschnitt der Trennwand angeformt ist, in einem Abstand zur Außenseite der Trennwand verläuft, einem freien, in Lichtaustrittsrichtung weisenden Endabschnitt, welcher als eine in Richtung zur Einheit hin bewegbare Handhabe dient und an seiner Außenseite eine Rastnase aufweist, welche in die Hinterschneidung des Trägerteils eingreift, die von einer in den Boden des Trägerteils eingebrachten Öffnung gebildet ist. Hierbei ist sowohl der federnde Arm als auch die Öffnung im Boden des Trägerteils ohne verstellbare Werkzeugteile herstellbar.

Ein weiterer Vorteil ist es, wenn der federnde Arm quer zu seiner Bewegungsrichtung mit einem kleinen Spiel in die Öffnung des Bodens des Trägerteils eingreift. Dadurch ist die Einheit durch den federnden Arm zusätzlich quer zur Bewegungsrichtung des federnden Arms an dem Trägerteil fixiert. In diesem Zusammenhang ist es zweckmäßig, wenn der an der Seitenwand der ersten Leuchtenkammer gedrückt anliegende Randabschnitt der Einheit mit einer Nase, welche am freien Ende einer entgegen der in Lichtaustrittsrichtung weisenden Fahne angebracht ist, in eine die Hinterschneidung bildende Öffnung der Seitenwand der ersten Leuchtenkammer eingreift. Eine solche Ausgestaltung ist sehr kostengünstig herstellbar und die Einheit ist nach einem Lösen des federnden Arms aus seiner Rastverbindung mit dem Trägerteil um die Hinterschneidung, in welche die Nase der Fahne eingreift, aus der ersten Leuchtenkammer heraus schwenkbar.

Bei einer Leuchte, bei welcher in die zwischen den beiden Leuchtenkammern verlaufende Trennwand eine Öffnung zur Aufnahme der Lampe für das Leselicht eingebracht ist, ist es weiterhin vorteilhaft, wenn die Trennwand mindestens aus zwei quer zueinander verlaufenden Wandabschnitten besteht, von denen eine zum federnden Element benachbart verläuft und in die andere, die zur Aufnahme der Lampe dienende Öffnung eingebracht ist, wobei zumindest ein die Öffnung aufweisendes Teilstück des einen Wandabschnitts der Trennwand ein an der Einheit befestigtes separates Teil ist, an dem die beiden Kontaktelemente befestigt sind. Dadurch ist zur Herstellung der die Lampe für das Leselicht aufnehmenden Öffnung der Trennwand kein verstellbares Werkzeugteil notwendig. In diesem Zusammenhang ist es vorteilhaft, wenn das die Öffnung aufweisende Teilstück der Trennwand entgegen der Lichtaustrittsrichtung schubladenartig in die Einheit eingeschoben ist und das Teilstück einer Leiterplatte ist, welche die beiden Kontaktelemente aufweist. Die Leiterplatte ist einfach und leicht zu montieren und kostengünstig in der Herstellung.

Ebenfalls ist es vorteilhaft, wenn der unlösbar mit der Lichtscheibe verbundene Wandabschnitt der Trennwand aus einem wärmebeständigeren Kunststoff als das Trägerteil besteht. Eine solche Lösung ist sehr kostengünstig, da nur die Einheit, das heißt ihre unlösbar mit der Lichtscheibe verbundene Trennwand gegebenenfalls ein die Lichtscheibe umgebender Rahmen, an welche die Trennwand angeformt ist, aus einem teureren Kunststoff hergestellt sein muß als das Trägerteil. Hierbei ist es zweckmäßig, wenn die Trennwand einstückig mit einem die Lichtscheibe umgebenden Rahmen ausgeführt ist, welcher zusammen mit der Lichtscheibe ein zum Boden des Trägerteils hin offener Kasten ist.

Zudem ist es vorteilhaft, wenn die an dem Trägerteil befestigten elektrischen Leitungselemente aus einem aus Federblech hergestellten Kontaktstreifen bestehen, welcher mit einer federnden Zunge an einer Kontaktfläche des Kontaktelementes unter Vorspannung anliegt. Bei einer solchen Ausgestaltung ist auch bei einem häufigen Wechsel der Lampe der Leseleuchte, das heißt, nach einem mehrmaligen demontieren und montieren der Einheit die elektrische Kontaktgabe zwischen den Kontaktelementen der Einheit und dem Leitungselement des Trägerteils sicher gegeben. In diesem Zusammenhang ist es weiterhin zweckmäßig, wenn die beiden elektrischen Kontaktstreifen an der Rückseite des Trägerteils hochkant in Rinnen des Trägerteils eingesetzt sind, wobei die federnde Zunge der Kontaktstreifen im Innenraum der zweiten Leuchtenkammer an dem Kontaktelement unter Vorspannung anliegt und die Trennwand mit seiner Außenseite gegen einen starren Arm des Kontaktstreifens drückt, welcher zusammen mit der federnden Zunge das Kontaktelement umfaßt. Dadurch ist die Montage der elektrischen Leitungselemente an der Rückseite des Trägerteils einfach und leicht. Außerdem weisen die Leitungselemente wegen ihrer hochkantigen Lage in Lichtaustrittsrichtung eine sehr hohe Biegefestigkeit auf, und somit ist die Lage des in die Leuchtenkammer hineinragenden starren Arms und der federnden Zunge auch nach einem mehrmaligen Wechsel der Lampe der Leseleuchte sicher. Darüber hinaus ist bei der Verwendung einer Leiterplatte als Trennwand die Leiterplatte klapperfrei gehalten.

Ferner ist es vorteilhaft, wenn die Einheit mit der Trennwand und dem Randabschnitt jeweils an einer entgegen der Lichtaustrittsrichtung gerichteten Fläche des Trägerteils anliegen, welche das Widerlager zu der zwischen der Einheit und dem Trägerteil bestehenden Rastverbindungen ist. Dadurch ist die Einheit klapperfrei an dem Trägerteil gehalten.

Bei einer besonders vorteilhaften Weiterbildung der Erfindung liegt die Einheit an den Innenflächen von zwei eine Ecke bildenden Seitenwänden der ersten Leuchtenkammer an. Dadurch ist ein leichtes und einfaches Einsetzen der Einheit in die erste Leuchtenkammer möglich.

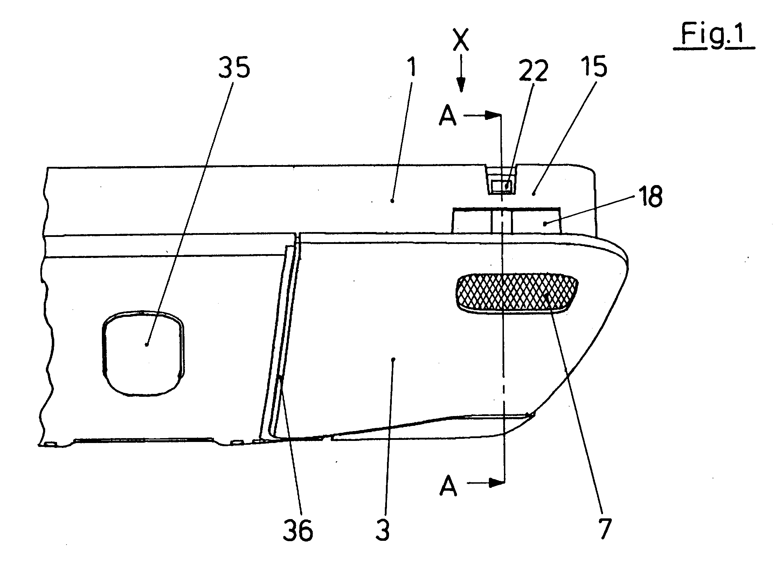

Ein Ausführungsbeispiel der Erfindung ist in der Zeichnung dargestellt, und zwar zeigen
- Figur 1: in einer Vorderansicht einen Teil einer Leuchte für den Innenraum von Kraftfahrzeugen, mit einer Abschlußscheibe für die allgemeine Innenraumbeleuchtung mit einer Lichtscheibe für Leselicht und mit einem elektrischen Schaltknopf;

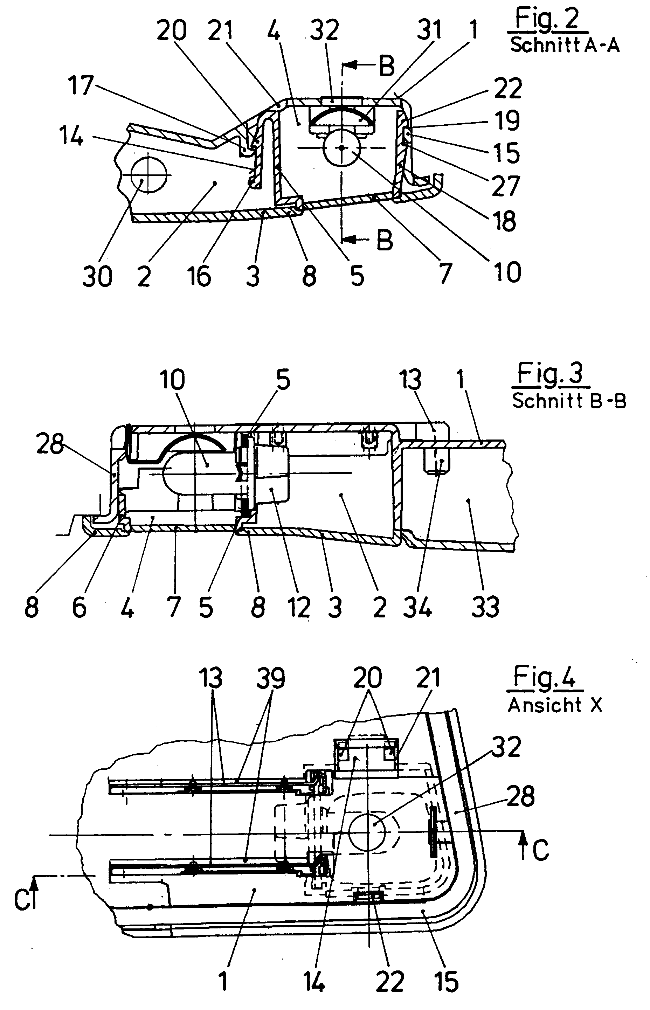

- Figur 2: einen Schnitt nach der Linie A-A der Figur 1 durch die Leuchtenkammer für die allgemeine Innenraumbeleuchtung und die neben dieser Leuchtenkammer angeordnete Leuchtenkammer für das Leselicht;
- Figur 3: einen Schnitt nach der Linie B-B der Figur 2;
- Figur 4: eine Ansicht aus Richtung x auf die Rückseite der Leuchte ;

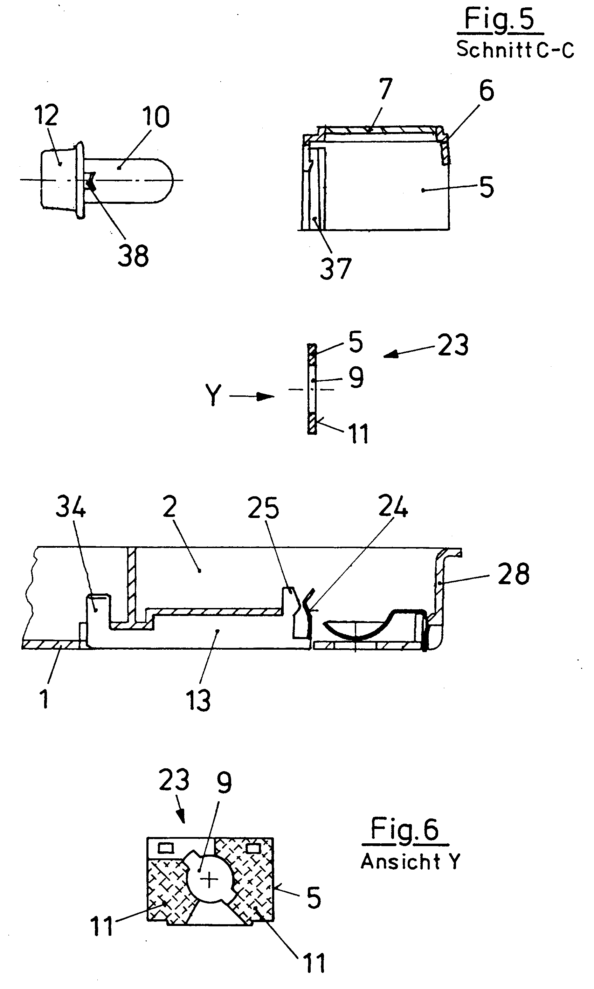

- Figur 5: einen Schnitt nach der Linie C-C der Figur 4, wobei eine separate Einheit der Leseleuchte und ein Trägerteil der Leuchte vor ihrem Zusammenfügen dargestellt ist und
- Figur 6: eine Ansicht aus Richtung y auf eine die Lampe der Leseleuchte haltende Leiterplatte der Einheit.

Die Leuchte ist in dem Fahrgastinnenraum eines Kraftfahrzeuges zwischen dem Fahrer und Beifahrersitz in eine Öffnung einer als Dachhimmel dienenden Fahrzeugwand (29) versenkt eingebaut und weist eine erste Leuchtenkammer (2) für die allgemeine Innenraumbeleuchtung und eine zweite Leuchtenkammer (4) für Leselicht auf. Die Innenleuchte und die Leseleuchte sind über einen Schalter (35) der Leuchte ein- und ausschaltbar. Die erste Leuchtenkammer (2) ist auf ihrer Vorderseite durch eine lichtdurchlässige Abschlußscheibe (3) abgeschlossen. Die zweite Leuchtenkammer (4) ist auf ihrer Vorderseite durch eine rechteckförmige lichtdurchlässige Lichtscheibe (7) abgeschlossen, welche in einem entsprechend großen Fenster der Abschlußscheibe (3) angeordnet ist. Die Abschlußscheibe (3) ist mit ihrem äußeren umlaufenden Rand auf einen Boden eines aus Kunststoff bestehenden Trägerteils (1) angeformten Seitenwänden der ersten Leuchtenkammer (2) aufgesetzt. In der ersten Leuchtenkammer (2) ist eine Lampe (30) und in der zweiten Leuchtenkammer (4) ist eine Lampe (10) eingesetzt. Angrenzend an die erste Leuchtenkammer (2) ist eine weitere Kammer (33) angeordnet, deren die Leuchte nach vorn hin abschließender Deckel eine Öffnung für einen Betätigungsknopf des elektrischen Schalters (35) aufweist. Zwischen der Abschlußscheibe (3) und der Kammer (33) ist ein Hebel (36) angeordnet, welcher bei seinem Schwenken entgegen der Lichtaustrittsrichtung die Abschlußscheibe (3) aus ihrer Verbindung zum Trägerteil (1) hin löst. Deshalb kann bei einem Wechsel der Lampen (10 und 30) das Trägerteil (1) in der Öffnung der Fahrzeugwand befestigt bleiben. Die Lichtscheibe (7) der Leseleuchte ist von einem aus Kunststoff bestehenden lichtundurchlässigen Rahmen (6) umgeben, welcher mit der Lichtscheibe (7) im Zweifarben-Spritzverfahren hergestellt ist. Zwischen der Lichtscheibe (7) und dem an die Lichtscheibe (7) angrenzenden Randabschnitt (8) des Fensters der Abschlußscheibe (3) besteht umlaufend ein Spalt, welcher durch den Rahmen (6) ausgefüllt ist. Der Rahmen (6) ist wie die Lichtscheibe (7) rechteckig gestaltet. An zwei Seiten des Rahmens (6) ist jeweils ein Wandabschnitt einer Trennwand (5) angeformt, welche zwischen der ersten und zweiten Leuchtenkammer (2, 4) verläuft. An das freie Ende eines Wandabschnitts der Trennwand (5) ist ein als federndes Element dienender Arm (14) angeformt, welcher in einem Abstand zur Trennwand (5) verläuft und mit seinem freien als Handhabe (16) dienenden freien Endabschnitt in Lichtaustrittsrichtung weist. An der Außenseite des federnden Arms (14) ist eine Rastnase (20) angeformt, welche eine von einem Rastelement gebildete Hinterschneidung (17) des Bodens des Trägerteils (1) hintergreift. Das die Hinterschneidung (17) bildende Rastelement ist von der die Außenseite des Trägerteils (1) formenden Werkzeughälfte durch eine Öffnung (21) im Boden des Trägerteils (1) hindurch geformt und weist zum Arm (14) hin. In die Öffnung (21) greift der federnde Arm (14) mit seinem an die Trennwand (5) angebundenen Endabschnitt mit einem kleinen Spiel quer zu seiner Bewegungsrichtung ein.

Auf der dem federnden Arm (14) gegenüberliegenden Seite des Rahmens (6) ist an den Rahmen (6) ein entgegen der Lichtaustrittsrichtung gerichteter Randabschnitt (18) angeformt, welcher durch den an dem die Hinterschneidung (17) bildenden Rastelement des Trägerteils (1) anliegenden federnden Arm (14) gegen an eine an den Boden des Trägerteils (1) angeformte Seitenwand (15) der ersten Leuchtenkammer (2) anliegt. Der Randabschnitt (18) weist eine zum Boden des Trägerteils (1) hin gerichtete Fahne mit einer Rastnase (22) auf, welche in eine von einer Öffnung der Seitenwand (15) gebildete Hinterschneidung (17) eingreift. Das Widerlager zu der Rastnase (22) ist eine in Lichtaustrittsrichtung gerichtete Fläche (27), welche von einer weiteren in die Seitenwand (15) eingebrachten Öffnung gebildet ist, in welche der Randabschnitt (15) mit einem Vorsprung eingreift und mit einem Randabschnitt des Vorsprungs an der Fläche (27) anliegt. Das Widerlager zu der Rastnase (20) des federnden Arms (14) ist der Boden des Trägerteils (1), an welcher die Trennwand (5) mit ihrem freien Ende anliegt. Der quer zur Bewegungsrichtung des federnden Arms (14) verlaufende Wandabschnitt der Trennwand (5), welcher an den Rahmen (6) angeformt ist, weist eine entgegen der Lichtaustrittsrichtung geöffnete Aussparung auf. In der Aussparung ist die Trennwand (5) von einem separaten plattenförmigen Teilstück gebildet, welches eine Leiterplatte (23) ist. Die Leiterplatte (23) ist schubladenartig in Führungsrinnen (37) des Rahmens (6) hin eingeschoben und ist in ihrer Endstellung mit dem Rahmen (6) verrastet. Dabei liegt die Leiterplatte (23) an der Innenseite des Randabschnitts der Aussparung der Trennwand (5) an. In die Leiterplatte (23) ist zentral eine Öffnung zur Aufnahme der Lampe (10) eingebracht, welche mit ihrem Sockel lösbar in eine Fassung (12) eingreift. Die Lampe (10) ist mit ihrem Glaskolben voraus durch die Öffnung (9) der Leiterplatte (23) hindurchgeschoben und die sie tragende Fassung ist mittels eines Drehverschlußes in der Öffnung (9) der Leiterplatte (23) befestigt. Hierbei hintergreifen zwei federnde elektrische Kontaktärmchen (38) den inneren Rand der Öffnung (9) der Leiterplatte (23) und liegen unter Vorspannung an jeweils einem Kontaktelement (11) der Leiterplatte (23) an. Die der Leiterplatte (23) gegenüberliegende Seite des Rahmens (6) liegt mit einem entgegen der Lichtaustrittsrichtung weisenden Randabschnitt an der Seitenwand (28) der ersten Leuchtenkammer (2) an. Somit ist die Einheit ein zum Boden des Trägerteils (1) hin offener Kasten. Zwischen der Lampe (10) und dem Boden des Trägerteils (1) ist ein schalenförmiger Reflektor (31) angeordnet, welcher mit einer seitlichen Lasche in eine Öffnung des Trägerteils (1) selbstrastend eingesetzt ist. In die Rückseite des Bodens des Trägerteils (1) sind parallel zueinander verlaufende Rinnen (39) eingebracht, welche zur Aufnahme von jeweils einem elektrischen Leitungselement (13) dienen, welches aus einem Kontaktstreifen besteht, der hochkant in die Rinnen (39) selbstrastend eingesetzt ist. Mit einem Endabschnitt ragen die elektrischen Leitungselemente (13) durch eine Öffnung im Boden der Kammer (33) hindurch und weisen im Innenraum der Kammer jeweils einen elektrischen Steckanschluß (34) auf. Die elektrischen Leitungselemente (13) weisen an dem anderen Endabschnitt eine in den Innenraum der zweiten Leuchtenkammer (4) ragende federnde Zunge (24) auf, welche an einem Kontaktelement (11) der Leiterplatte (23) unter Vorspannung anliegt und die Leiterplatte (23) an ihrer Außenseite gegen ein in die ersten Leuchtenkammer (2) hineinragenden starren Arm des elektrischen Leitungselementes (13) drückt.

### Leuchte für den Innenraum von Kraftfahrzeugen

- 1: Trägerteil
- 2: erste Leuchtenkammer
- 3: Abschlußscheibe
- 4: zweite Leuchtenkammer
- 5: Trennwand
- 6: Rahmen
- 7: Lichtscheibe
- 8: Randabschnitt
- 9: Öffnung
- 10: Lampe
- 11: Kontaktelement
- 12: Fassung
- 13: Leitungselement
- 14: federndes Element
- 15: Seitenwand
- 16: Handhabe
- 17: Hinterschneidung
- 18: Randabschnitt
- 19: Hinterschneidung
- 20: Rastnase
- 21: Öffnung
- 22: Nase
- 23: Teilstück
- 24: Zunge
- 25: Arm
- 26: Gleitfläche
- 27: Fläche
- 28: Seitenwand
- 29: Fahrzeugwand
- 30: Lampe
- 31: Reflektor
- 32: Loch
- 33: Kammer
- 34: Steckeranschluß
- 35: Schalter
- 36: Kipphebel
- 37: Führungsrinne
- 38: Kontaktärmchen
- 39: Rinne

## Patentansprüche

1. Leuchte für den Innenraum von Kraftfahrzeugen, mit einem Trägerteil (1), welches in eine Fahrzeugöffnung einsetzbar ist, mit einer für die allgemeine Innenraumbeleuchtung dienenden ersten Leuchtenkammer (2), deren Innenraum von dem Trägerteil (1) und einer die erste Leuchtenkammer (2) zur Vorderseite der Leuchte hin abschließenden, lichtdurchlässigen Abschlußscheibe (3) gebildet ist, zwischen der und dem Trägerteil (1) eine von der Vorderseite der Leuchte her lösbare Verbindung besteht, mit einer für Leselicht dienenden zweiten Leuchtenkammer (4), welche durch eine lichtundurchlässige Trennwand (5) von der ersten Leuchtenkammer (2) getrennt ist und deren Vorderseite von einer Lichtscheibe (7) abschlossen ist, welche mit der Trennwand (5) verbunden ist und zu einem Randabschnitt (8) der Abschlußscheibe (3) angrenzend verläuft, mit jeweils einer in die erste und zweite Leuchtenkammer (2, 4) eingesetzten Lampe (10 bzw. 30) und mit zwei Kontaktelementen (11), durch welche eine elektrische Verbindung zwischen der Lampe (10) der Leseleuchte und zwei an dem Trägerteil (1) befestigten elektrischen Leitungselementen (13) besteht, dadurch gekennzeichnet, daß
- die Lichtscheibe (7) der Leseleuchte, die Lampe (10) der Leseleuchte, die zwischen beiden Leuchtenkammern (2, 4) verlaufende Trennwand (5) und die beiden elektrischen Kontaktelemente (11) zusammen eine Einheit sind, welche in den Innenraum der ersten Leuchtenkammer (2) eingesetzt ist, entgegen der Lichtaustrittsrichtung mit einem kleinen Spiel zwischen Fixierungselementen des Trägerteils (1) eingeführt ist und lösbar mit dem Trägerteil (1) verbunden ist;
- die lösbare Verbindung von einem in dem Innenraum der ersten Leuchtenkammer (2) angeordneten federnden Element (14) gebildet ist, welches sich an dem Trägerteil (1) abstützt und die Einheit gegen eine Innenseite einer Seitenwand (15) der ersten Leuchtenkammer (2) drückt und welches eine Handhabe (16) zum Lösen der zwischen der Einheit und dem Trägerteil (1) bestehenden Verbindung aufweist;
- die beiden Kontaktelemente (11) der Einheit jeweils mit den beiden an dem Trägerteil (1) befestigten elektrischen Leitungselementen (13) durch eine lösbare Steckverbindung elektrisch verbunden sind, wobei die Kontaktelemente (11) und die Leitungselemente (13) in einer Richtung zusammengefügt sind, welche parallel zur Lichtaustrittsrichtung verläuft.

2. Leuchte nach Anspruch 1, dadurch gekennzeichnet, daß das federnde Element (14) in eine als Rastelement dienende Hinterschneidung (17) des Trägerteils (1) eingreift und daß die Einheit mit einem entgegen der Lichtaustrittsrichtung weisenden Randabschnitt (18) gedrückt an der Seitenwand (15) der ersten Leuchtenkammer (2) anliegt und in eine Hinterschneidung (19) der Seitenwand (15) eingreift.

3. Leuchte nach einem der Ansprüche 1 oder 2, dadurch gekennzeichnet, daß das federnde Element (14) ein federnder Arm (14) ist, welcher mit einem Endabschnitt an dem zum Trägerteil (1) hin gerichteten Randabschnitt der Trennwand (5) angeformt ist, in einem Abstand zur Außenseite der Trennwand (5) verläuft und einen freien, in Lichtaustrittsrichtung gerichteten Endabschnitt aufweist, welcher als eine in Richtung zur Einheit hin bewegbare Handhabe (16) dient.

4. Leuchte nach einem der Ansprüche 1 bis 3, dadurch gekennzeichnet, daß der an der Seitenwand (15) der ersten Leuchtenkammer (2) gedrückt anliegende Randabschnitt (18) der Einheit mit einer Nase (22), welche am freien Ende einer entgegen der Lichtaustrittsrichtung weisenden Fahne angebracht ist, in eine Hinterschneidung (19) bildende Öffnung der Seitenwand (15) der ersten Leuchtenkammer (2) eingreift.

5. Leuchte mit einer in die Trennwand (5) eingebrachte Öffnung (9), in welcher die Lampe (10) für Leselicht eingesetzt ist, nach einem der Ansprüche 1 bis 4, dadurch gekennzeichnet, daß die Trennwand (5) mindestens aus zwei quer zueinander verlaufenden Wandabschnitten besteht, von denen eine zum federnden Element (14) benachbart verläuft und in die andere, die zur Aufnahme der Lampe (10) dienende Öffnung (9) eingebracht ist, wobei zumindest ein die Öffnung (9) aufweisendes Teilstück des einen Wandabschnitts der Trennwand (5) ein an der Einheit befestigtes separates Teil ist, an dem die beiden Kontaktelemente (11) angebracht sind.

6. Leuchte nach Anspruch 5, dadurch gekennzeichnet, daß das die Öffnung (9) aufweisende Teilstück der Trennwand (5) entgegen der Lichtaustrittsrichtung schubladenartig in die Einheit eingeschoben ist und eine Leiterplatte ist, welche die Kontaktelemente (11) aufweist.

7. Leuchte nach einem der Ansprüche 1 bis 6, dadurch gekennzeichnet, daß der unlösbar mit der Lichtscheibe (7) verbundene Wandabschnitt der Trennwand (5) aus einem wärmebeständigeren Kunststoff als das Trägerteil (1) besteht.

8. Leuchte nach einem der Ansprüche 1 bis 7, dadurch gekennzeichnet, daß die an dem Trägerteil (1) befestigten elektrischen Leitungselemente (13) aus einem aus Federblech hergestellten Kontaktstreifen bestehen, welcher mit einer federnden Zunge (24) an einer Kontaktfläche des Kontaktelements (11) unter Vorspannung anliegt.

9. Leuchte nach einem der vorstehenden Ansprüche, dadurch gekennzeichnet, daß die Einheit mit der Trennwand (5) und dem Randabschnitt jeweils an einer entgegen der Lichtaustrittsrichtung gerichteten Fläche des Trägerteils (1) anliegt, welche das Widerlager zu der zwischen der Einheit und dem Trägerteil (1) bestehenden Rastverbindungen ist.

10. Leuchte nach einem der vorstehenden Ansprüche, dadurch gekennzeichnet, daß die Einheit an den Innenflächen von zwei eine Ecke bildenden Seitenwänden (15, 28) der ersten Leuchtenkammer (2) anliegt.

## Claims

1. Light for the interior of motor vehicles, with a carrier member (1) which can be inserted in a vehicle aperture, and with a first light chamber (2) serving for general interior illumination whose interior is formed by the carrier member (1) and by a light transmitting closure cover (3) which closes off the first light chamber (2) at the front of the light and between which and the carrier member (1) there exists a connection releasable from the front of the light, and with a second light chamber (4) serving for reading illumination which is separated from the first light chamber (2) by an opaque partition (5) and whose front is closed off by a lens (7) that is connected with the partition (5) and extends to adjoin a rim section (8) of the closure cover (3), and with bulbs (10 and 30) respectively fitted in the first and second light chambers (2 and 4), and with two contact members (11) by means of which electrical connection is established between the bulb (10) of the reading light and two electrical conductor elements (13) attached to the carrier member (1), characterised in that
- the lens (7) of the reading light, the bulb (10) of the reading light, the partition (5) extending between the two light chambers (2, 4) and the two electrical contact members (11) together constitute a unit which is fitted into the interior of the first light chamber (2) and is entered in the direction opposite to the emerging light direction between locating elements of the carrier member (1) with slight play and releasably connected with the carrier member (1);
- the releasable connection is formed by a spring element (14) which is arranged in the interior of the first light chamber (2) and which bears against the carrier member (1) and presses the unit against an inner surface of a side wall (15) of the first light chamber (2) and which has a finger grip (16) for releasing the connection existing between the unit and the carrier member (1);
- the two contact members (11) of the unit are respectively electrically connected by way of a releasable plug-in connection with the two electrical conductor elements (13) attached to the carrier member (1), the contact members (11) and the conductor elements (13) being joined together in a direction which extends parallel to the emerging light direction.

2. Light according to claim 1, characterised in that the spring element (14) engages in an undercut (17) of the carrier member (1) serving as latch element and in that the unit, by way of a rim section (18) that is directed opposite to the emerging light direction, abuts under pressure against the side wall (15) of the first light chamber (2) and engages in an undercut (19) of the side wall (15) .

3. Light according to one of claims 1 and 2, characterised in that the spring element (14) is a spring arm (14) which at its end section is formed onto a rim section of the partition (5) that is directed towards the carrier member (1), extends spaced from the outer surface of the partition (5) and has a free end section directed in the emerging light direction which serves as a finger grip (16) displaceable in the direction towards the unit.

4. Light according to one of claims 1 to 3, characterised in that the rim section (18) of the unit pressed into abutment with the side wall (15) of the first light chamber (2) engages by way of a nose (22) in an undercut (19) formed by an aperture in the side wall (15) of the first light chamber (2), the nose (22) being provided at the free end of a lug pointing in the direction opposite to the emerging light direction.

5. Light with an aperture (9) provided in the partition (5) in which the bulb (10) for reading illumination is fitted, according to one of claims 1 to 4, characterised in that the partition (5) consists of at least two wall sections extending transversely with respect to each other, of which one extends proximate with respect to the spring element (14) and the other is provided with the aperture (9) which serves for reception of the bulb (10), wherein at least a part that has the aperture (9) of the said wall section of the partition (5) is a separate part attached to the unit and has the contact members (11) arranged on it.

6. Light according to claim 5, characterised in that the part of the partition (5) that has the aperture (9) is slid into the unit, like a drawer, in a direction opposite to the emerging light direction, and is a printed circuit board having the contact members (11).

7. Light according to one of claims 1 to 6, characterised in that the wall section of the partition (5) which is non-releasably connected to the lens (7) consists of plastics material that is more resistant to heat than the carrier member (1).

8. Light according to one of claims 1 to 7, characterised in that the electrical conductor elements (13) attached to the carrier member (1) consist of a contact strip made of spring steel sheet which abuts with a spring tongue (24), under pre-load, against a contact surface of the contact member (11).

9. Light according to one of the preceding claims, characterised in that the unit, by way of the partition (5) and the rim section, abuts against respective surfaces of the carrier member (1) which are directed in the direction opposite to the emerging light direction and which constitute the abutment for the latch connections existing between the unit and the carrier member (1).

10. Light according to one of the preceding claims, characterised in that the unit abuts against the inner surfaces of two corner forming side walls (15, 28) of the first light chamber (2).

## Revendications

1. Lampe pour l'intérieur de véhicules automobiles, comportant une partie de support (1) susceptible d'être mise en place dans une ouverture d'un véhicule, comportant une première chambre de lampe (2) servant à l'éclairage intérieur général, dont l'espace intérieur est formé par la partie de support (1) et par une plaque de fermeture transparente (3) qui referme la première chambre de lampe (2) vers la face avant de la lampe, et il existe entre ladite plaque de fermeture (3) et la partie de support (1) une liaison détachable depuis la face avant de la lampe, comportant une seconde chambre de lampe (4) servant à une lampe de lecture, qui est séparée de la première chambre de lampe (2) par une paroi de séparation opaque (5) et dont la face avant est refermée par une plaque d'éclairement (7) qui est reliée à la paroi de séparation (5) et qui est adjacente à une zone de bordure (8) de la plaque de fermeture (3), comportant des ampoules (10 ou 30) respectivement mises en place dans la première et dans la seconde chambre de lampe (2, 4), et comportant deux éléments de contact (11) grâce auxquels il existe une connexion électrique entre l'ampoule (10) de la lampe de lecture et deux éléments conducteurs électriques (13) fixés sur la partie de support (1), caractérisée en ce que :
- la plaque d'éclairement (7) de la lampe de lecture, l'ampoule (10) de la lampe de lecture, la paroi de séparation (5) qui s'étend entre les deux chambres de lampe (2, 4), et les deux éléments de contact électriques (11) forment conjointement une unité qui est mise en place dans l'espace intérieur de la première chambre de lampe (2), et qui est introduite en sens opposé à la direction de sortie de lumière avec un faible jeu entre des éléments de fixation de la partie de support (1) et qui est reliée de façon détachable à la partie de support (1) ;
- la liaison détachable est formée par un élément élastique (14) agencé dans l'espace intérieur de la première chambre de lampe (2), qui s'appuie contre la partie de support (1) et qui presse l'unité contre une face intérieure d'une paroi latérale (15) de la première chambre de lampe (2), et qui présente une manette (16) pour défaire la liaison existant entre l'unité et la partie de support (1) ;
- les deux éléments de contact (11) de l'unité sont électriquement connectés respectivement avec les deux éléments conducteurs électriques (13) fixés sur la partie de support (1) par une liaison à enfichage détachable, et les éléments de contact (11) et les éléments conducteurs (13) sont assemblés dans une direction qui s'étend parallèlement à la direction de sortie de lumière.

2. Lampe selon la revendication 1, caractérisée en ce que l'élément élastique (14) s'engage dans une contre-dépouille (17) servant d'élément d'enclenchement dans la partie de support (1), et en ce que l'unité s'appuie sous contrainte par la zone de bordure (18) dirigée en sens opposé à la direction de sortie de lumière contre la paroi latérale (15) de la première chambre de lampe (2) et elle s'engage dans une contre-dépouille (19) de la paroi latérale (15).

3. Lampe selon l'une ou l'autre des revendications 1 et 2, caractérisée en ce que l'élément élastique (14) est un bras élastique (14) qui est formé par un tronçon d'extrémité sur la zone de bordure de la paroi de séparation (5), qui est dirigée vers la partie de support (1), qui s'étend à une distance de la face extérieure de la paroi latérale (5) et qui présente un tronçon d'extrémité libre dirigé en direction de sortie de lumière, lequel sert de manette (16) mobile en direction vers l'unité.

4. Lampe selon l'une quelconque des revendications 1 à 3, caractérisée en ce que la zone de bordure (18) de l'unité, qui s'appuie sous contrainte contre la paroi latérale (15) de la première chambre de lampe (2) s'engage, conjointement avec un bec (22) qui est agencé à l'extrémité libre d'une patte dirigée en sens opposé à la direction de sortie de lumière, dans une ouverture de la paroi latérale (15) de la première chambre de lampe (2), qui forme une contre-dépouille.

5. Lampe comportant une ouverture (9) ménagée dans la paroi de séparation (5), dans laquelle est mise ne place l'ampoule (10) pour la lampe de lecture, selon l'une quelconque des revendications 1 à 4, caractérisée en ce que la paroi de séparation (5) est constituée par au moins deux sections de paroi qui s'étendent transversalement l'une à l'autre et dont l'une s'étend au voisinage de l'élément élastique (14) et est agencée dans l'autre ouverture (9) servant à recevoir l'ampoule (10), et au moins une pièce partielle présentant l'ouverture (9) de l'une des sections de paroi de la paroi de séparation (5) est une pièce séparée fixée sur l'unité, sur laquelle sont agencés les deux éléments de contact (11).

6. Lampe selon la revendication 5, caractérisée en ce que la pièce partielle présentant l'ouverture (9) de la paroi de séparation (5) est introduite dans l'unité à la manière d'un tiroir, en sens opposé à la direction de sortie de lumière, et en ce qu'elle est une platine de circuit qui présente les éléments de contact (11).

7. Lampe selon l'une quelconque des revendications 1 à 6, caractérisée en ce que la section de paroi de la paroi de séparation (5), qui est reliée de façon non détachable à la plaque d'éclairement (7), est constituée en une matière plastique plus résistante à la chaleur que la partie de support (1).

8. Lampe selon l'une quelconque des revendications 1 à 7, caractérisée en ce que les éléments conducteurs électriques (13) fixés sur la partie de support (1) sont constitués par une bande de contact réalisée en tôle élastique, qui s'appuie par une languette élastique (24) sous précontrainte contre une surface de contact de l'élément de contact (11).

9. Lampe selon l'une quelconque des revendications précédentes, caractérisée en ce que l'unité s'appuie, avec la paroi de séparation (5) et la zone de bordure, contre une surface respective de la partie de support (1), qui est dirigée en sens opposé à la direction de sortie de lumière et qui est l'élément complémentaire des liaisons à enclenchement existant entre l'unité et la partie de support (1).

10. Lampe selon l'une quelconque des revendications précédentes, caractérisée en ce que l'unité s'appuie contre les surfaces intérieures de deux parois latérales (15, 28) formant coin de la première chambre de lampe (2).
